(19) Europäisches Patentamt
European Patent Office
Office européen des brevets

(11) EP 4 621 452 A1

(12) # EUROPEAN PATENT APPLICATION
published in accordance with Art. 153(4) EPC

(43) Date of publication:
**24.09.2025 Bulletin 2025/39**

(21) Application number: **23891923.7**

(22) Date of filing: **10.11.2023**

(51) International Patent Classification (IPC):
***G02B 5/30*** *(2006.01)*

(52) Cooperative Patent Classification (CPC):
**G02B 5/30**

(86) International application number:
**PCT/KR2023/018031**

(87) International publication number:
**WO 2024/106856 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2022 KR 20220153345**

(71) Applicant: **SAMSUNG SDI CO., LTD.**
**Yongin-si, Gyeonggi-do 17084 (KR)**

(72) Inventors:
- **LEE, Beom Deok**
  **Suwon-si Gyeonggi-do 16678 (KR)**
- **SHIM, Dae Seob**
  **Suwon-si Gyeonggi-do 16678 (KR)**
- **LEE, Seong Hoon**
  **Suwon-si Gyeonggi-do 16678 (KR)**
- **JEONG, Seon Gyeong**
  **Suwon-si Gyeonggi-do 16678 (KR)**
- **LIM, Hyoung Tae**
  **Suwon-si Gyeonggi-do 16678 (KR)**
- **KIM, Gi Beom**
  **Suwon-si Gyeonggi-do 16678 (KR)**

(74) Representative: **Michalski Hüttermann & Partner Patentanwälte mbB**
**Kaistraße 16A**
**40221 Düsseldorf (DE)**

(54) **POLARIZING PLATE AND OPTICAL DISPLAY DEVICE**

(57) Polarizer; and a first phase layer, a first phase layer, and a second phase layer laminated on one side of the polarizer, and The first adhesive layer is a polarizer, in which the storage modulus is 4 x $10^4$Pa to 10 x $10^4$Pa at 25°C, and the glass transition temperature is -60°C to -35°C.

【FIG. 1】

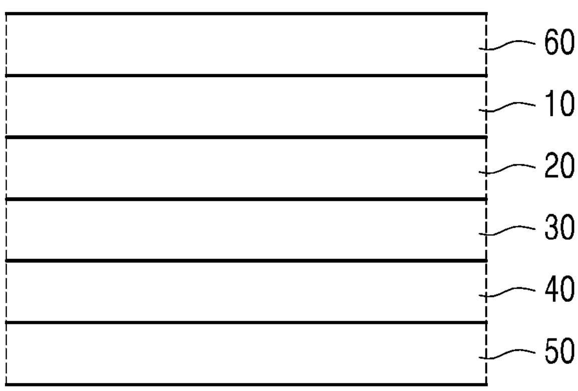




Processed by Luminess, 75001 PARIS (FR)

## Description

[Technical Field]

The present invention relates to a polarizing plate and an optical display device.

[Background Art]

A liquid crystal display may include a liquid crystal layer in which liquid crystals are aligned in a horizontal direction. In this regard, there are liquid crystal displays employing in-plane switching (IPS) or fringe field switching (FFS). In such a horizontal alignment liquid crystal display, liquid crystals are horizontally aligned to be rotated in a plane so as to transmit or block light when two electrodes are driven at one side of a substrate, thereby improving viewing angle.

When there is pre-tilt in alignment of liquid crystals, the horizontal alignment liquid crystal display is more likely to have anisotropy of colors or visibility at right and left sides or at upper and lower sides. As a result, the amount of birefringence can be different at the right and left side or at the upper and lower sides, thereby causing imbalance of visibility (viewing angle) at the right and left sides or at the upper and lower sides. To solve this problem, a polarizing plate including a retardation layer between a polarizer and a panel may be used. Generally, the polarizing plate may include two or more retardation layers to solve this problem.

However, two or more retardation layers can cause a thickness imbalance between upper and lower surfaces of the polarizing plate, and since the retardation layers are typically formed by film stretching, the polarizing plate can suffer from bending. Herein, bending refers to slight lifting of the polarizing plate at an edge thereof and can cause light leakage.

The background technique of the present invention is disclosed in JP Unexamined Patent Publication No. 2006-251659 and the like.

[Disclosure]

[Technical Problem]

It is one aspect of the present invention to provide a polarizing plate that provides a diagonal compensation effect on side surfaces including the left side and the right side.

It is another aspect of the present invention to provide a polarizing plate that suppresses light leakage at edges thereof by suppressing bending.

[Technical Solution]

One aspect of the present invention relates to a polarizing plate.

The polarizing plate includes: a polarizer; and a laminate of a first retardation layer, a first adhesive layer, and a second retardation layer stacked on one surface of the polarizer, wherein the first adhesive layer has a storage modulus of $4 \times 10^4$ Pa to $10 \times 10^4$ Pa at 25°C and a glass transition temperature of -60°C to - 35°C.

Another aspect of the present invention relates to an optical display device.

The optical display device includes the polarizing plate according to the present invention.

[Advantageous Effects]

The present invention provides a polarizing plate that provides a diagonal compensation effect on side surfaces including the left side and the right side.

The present invention provides a polarizing plate that suppresses light leakage at edges thereof by suppressing bending.

[Description of Drawings]

FIG. 1 is a side sectional view of a polarizing plate according to one embodiment of the present invention.
FIG. 2 is a side sectional view of a polarizing plate according to another embodiment of the present invention.
FIG. 3 is a side sectional view of a polarizing plate according to a further embodiment of the present invention.

[Best Mode]

Hereinafter, exemplary embodiments of the present invention will be described in detail with reference to the accompanying drawings such that the present invention can be easily implemented by a person having ordinary knowledge in the art. It should be understood that the present invention may be embodied in different ways and is not limited to the following embodiments.

The terminology used herein is for the purpose of describing exemplary embodiments and is not intended to limit the present invention. As used herein, the singular forms "a", "an", and "the" are intended to include the plural forms as well, unless the context clearly indicates otherwise.

In the drawings, components unrelated to description are omitted for clear description of the invention and like components will be denoted by like reference numerals throughout the specification. Although lengths, thicknesses or widths of various components may be exaggerated for understanding in the drawings, the present invention is not limited thereto.

Herein, spatially relative terms, such as "upper" and "lower", are defined with reference to the accompanying drawings. Thus, it will be understood that "upper surface" can be used interchangeably with "lower surface". In addition, when an element is referred to as being placed "on" another element, it may be directly placed on the other element, or intervening element(s) may be present. On the other hand, when an element is referred to as being placed or formed "directly on" another element, there are no intervening element(s) therebetween.

Herein, "in-plane retardation Re", "out-of-plane retardation Rth", and "degree of biaxiality NZ" are represented by Equations A, B and C, respectively:

[Equation A]

$$Re = (nx - ny) \times d$$

[Equation B]

$$Rth = ((nx + ny)/2 - nz) \times d$$

[Equation C]

$$NZ = (nx - nz)/(nx - ny)$$

where nx, ny, and nz are the indexes of refraction of an optical device, as measured in the slow axis direction, the fast axis direction and the thickness direction thereof at a measurement wavelength, respectively, and d is the thickness thereof (unit: nm).

Unless specified otherwise, in-plane retardation, out-of-plane retardation, and the degree of biaxiality refer to values measured by transmitting light through the optical device in the normal direction to an in-plane direction of the optical device.

As used herein to represent an angle, "+" refers to the clockwise direction and "-" refers to the counterclockwise direction with respect to a reference (0°).

Herein, "storage modulus" of a first adhesive layer refers to a value measured on a specimen at 25°C by a temperature sweep test using a storage modulus measurement instrument (ARES, Advanced Rheometry Expansion System, TA Instrument Inc.) under conditions of frequency: 1 Hz, strain: 5%, normal force: 100 N while heating the specimen from 0°C to 150°C at a heating rate of 10°C/min, in which the specimen is prepared by stacking a plurality of first adhesive layers each having a thickness of 15 μm to form a laminate having a thickness of 600 μm and cutting the laminate into a circular shape having a diameter of 8 mm.

Herein, "glass transition temperature" of the first adhesive layer refers to a value measured using a DSC Discovery (TA Instrument Inc.) by heating a specimen prepared from 15 mg of the first adhesive layer to 100°C at a heating

rate of 20°C/min in a nitrogen atmosphere (nitrogen flow rate of 50 mL/min), cooling the specimen to -80°C, and heating the specimen to 100°C again at a heating rate of 10°C/min.

Herein, "shrinkage force" of a polarizing plate may be measured using a thermomechanical analyzer (TMA) in accordance with the ASTM E831 standard. Specifically, the "shrinkage force" of the polarizing plate is measured by preparing a rectangular specimen having a size of 30 mm x 3 mm (MD (machine direction) of a polarizer x TD (transverse direction) thereof), and clamping both ends of the specimen in the MD to both jigs of the TMA, followed by measuring shrinking force of the rectangular specimen upon shrinking at 85°C for 3 hours.

Herein, "shrinkage rate" of a polarizing plate is measured on a square specimen (60 mm x 60 mm) (MD (machine direction) of a polarizer x TD (transverse direction) thereof)) subjected to constant high temperature treatment at 60°C for 250 hours. The MD length of the specimen before the high temperature treatment and the MD length of the specimen after the high temperature treatment are measured using a dimensional measurement instrument and calculated according to the following equation.

[Equation]

$$\text{Shrinkage rate} = \left| S1 - S0 \right| / S0 \times 100,$$

where S0 is the MD length of the specimen before high temperature treatment, and
S1 is the MD length of the specimen after high temperature treatment.

Herein, "shrinkage rate" of a retardation layer or a protective layer refers to a value measured substantially in the same manner except that the retardation layer or the protective layer is used instead of the polarizing plate when measuring the shrinkage rate of the polarizing plate.

Herein, "shrinkage force" of a retardation layer or a protective layer is a value measured substantially in the same manner except that the retardation layer or the protective layer is used instead of the polarizing plate when measuring the shrinkage force of the polarizing plate.

Herein, "(meth)acryl" means acryl and/or methacryl.

As used herein to represent a specific numerical range, "X to Y" means a value greater than or equal to X and less than or equal to Y.

A polarizing plate according to the present invention provides a diagonal compensation effect on side surfaces including the left side and the right side when applied to an optical display panel, particularly a liquid crystal panel with horizontally aligned liquid crystals. The liquid crystal panel with horizontally aligned liquid crystals may refer to a liquid crystal panel employing in-plane switching (IPS) or fringe field switching (FFS).

The polarizing plate according to the present invention provides an effect of suppressing light leakage at an edge of the polarizing plate by suppressing bending. Herein, "bending" may refer to warping in which, when the polarizing plate is placed on a flat bottom surface, an edge of the polarizing plate is lifted from the flat bottom surface. In one embodiment, bending may be measured when a laminate of a first retardation layer, a first adhesive layer, and a second retardation layer of the polarizing plate is placed on the flat bottom surface and a detailed measurement method will be described below.

A polarizing plate includes: a polarizer; and a laminate of a first retardation layer, a first adhesive layer, and a second retardation layer stacked on one surface of the polarizer, wherein the first adhesive layer has a storage modulus of $4 \times 10^4$ Pa to $10 \times 10^4$ Pa at 25°C and a glass transition temperature of -60°C to -35°C.

## Polarizer

The polarizer includes a light absorption type polarizer that divides incident light into two orthogonal polarization components and transmits one polarization component while absorbing the other polarization component.

In one embodiment, an axis of the polarizer having a higher index of refraction in an in-plane direction of the polarizer may be a light absorption axis of the polarizer (for example, the machine direction (MD) of the polarizer) and an axis of the polarizer having a lower index of refraction may refer to a light transmission axis of the polarizer (for example, the transverse direction (TD) of the polarizer).

The polarizer may have a degree of polarization of 95% or more, specifically 95% to 100%, more specifically 98% to 100%. Within this range, the polarizing plate can secure a good diagonal compensation effect.

The polarizer may include a polarizer that contains a dichroic dye and is uniaxially stretched. Specifically, a polarizer containing a dichroic dye may include a polarizer prepared by uniaxially stretching a base film for polarizers and dyeing the base film with a dichroic dye (for example, iodine or an iodine-containing substance including potassium iodide). The base film for polarizers may include a polyvinyl alcohol film or a derivative thereof, without being limited thereto. The polarizer may be prepared by any typical method known to those skilled in the art.

The polarizer may have a thickness of 1 μm to 40 μm, specifically 15 μm to 30 μm, more specifically 16 μm to 20

μm. Within this range, the polarizer can be used in the polarizing plate.

## First retardation layer and second retardation layer

The first retardation layer and the second retardation layer may be stacked on one surface of the polarizer, preferably on a light incidence surface of the polarizer on which internal light is incident, to provide the diagonal compensation effect on a side surface including a left side or an upper side and a right side or a lower side. Herein, the "internal light" means light incident on the polarizer after being emitted from a backlight unit and passing through a liquid crystal panel.

In one embodiment, the first retardation layer and the second retardation layer may be stacked in the stated order on a lower surface of the polarizer. In another embodiment, the second retardation layer and the first retardation layer may be stacked in the stated order on the lower surface of the polarizer. Preferably, the first retardation layer and the second retardation layer are stacked in the stated order on the lower surface of the polarizer, thereby further suppressing bending while further improving the diagonal compensation effect.

The first retardation layer may be a positive C layer and can satisfy a relationship of the indexes of refraction: $nz > nx \fallingdotseq ny$. The first retardation layer may have an out-of-plane retardation of -110 nm to -50 nm, for example, -110 nm, - 105 nm, -100 nm, -95 nm, -90 nm, -85 nm, -80 nm, -75 nm, -70 nm, -65 nm, -60 nm, -55 nm, or -50 nm, for example, -110 nm to -60 nm, for example, -90 nm to -65 nm, at a wavelength of 550 nm. Within this range, the polarizing plate can easily provide the diagonal compensation effect.

The first retardation layer may have an in-plane retardation of -10 nm to 10 nm, preferably 0 nm to 5 nm, at a wavelength of 550 nm. Within this range, the polarizing plate can easily provide the out-of-plane retardation described above.

The second retardation layer may be a positive A retardation layer and can satisfy a relationship of the indexes of refraction: $nx > ny \fallingdotseq nz$. The second retardation layer may have an in-plane retardation of 100 nm to 150 nm, for example, 100 nm, 105 nm, 110 nm, 115 nm, 120 nm, 125 nm, 130 nm, 135 nm, 140 nm, 145 nm, or 150 nm, preferably 110 nm to 130 nm, at a wavelength of 550 nm. Within this range, the polarizing plate can easily provide the diagonal compensation effect.

The second retardation layer may have an out-of-plane retardation of 50 nm to 80 nm, for example, 50 nm, 55 nm, 60 nm, 65 nm, 70 nm, 75 nm, or 80 nm, preferably 55 nm to 70 nm, at a wavelength of 550 nm. Within this range, the polarizing plate can easily provide the diagonal compensation effect.

The second retardation layer may have a degree of biaxiality of 0.9 to 1.2, for example, 0.9, 0.95, 1.0, 1.05, 1.1, 1.15, or 1.2, preferably 0.95 to 1.1, at a wavelength of 550 nm. Within this range, the polarizing plate can easily provide the diagonal compensation effect.

The first retardation layer may be a liquid crystal layer or a non-liquid crystal layer.

When the first retardation layer is a liquid crystal layer, the first retardation layer may be formed by coating a composition for liquid crystal layers onto a base film or the like, followed by drying and curing. Since the first retardation layer in the form of the liquid crystal layer is formed without a process, such as stretching and the like, it can be easy to reduce bending of the polarizing plate. The composition for the liquid crystal layer may be prepared from a typical composition for liquid crystal layers known to those skilled in the art. For example, the composition for liquid crystal layers may include nematic or discotic liquid crystals or the like.

When the first retardation layer is a non-liquid crystal layer, the first retardation layer may be formed by coating a composition for non-liquid crystal layers on a base film or the like, followed by drying and curing. The first retardation layer in the form of the non-liquid crystal layer is a non-stretched coating layer formed without stretching or the like and can make it easy to suppress bending of the polarizing plate.

The composition forming the first retardation layer as a non-stretched coating layer may include a compound, for example, a cellulose compound, such as a cellulose ester, cellulose ether and the like, a resin, for example, polystyrene and the like, an oligomer, or a monomer.

The cellulose compound may include at least a unit, in which at least some hydrogen atoms (H) of hydroxyl groups (OH) [a $C_2$ hydroxyl group, a $C_3$ hydroxyl group or a $C_6$ hydroxyl group] of a sugar monomer constituting cellulose are substituted with an acyl group or an ether group. That is, the cellulose compound may include at least one of a cellulose ester polymer or a cellulose ether polymer.

For example, the cellulose polymer may include a cellulose ester polymer including at least a unit in which at least some hydrogen atoms (H) of hydroxyl (OH) groups [a $C_2$ hydroxyl group, a $C_3$ hydroxyl group or a $C_6$ hydroxyl group] of a sugar monomer constituting cellulose are substituted with an acyl group, as represented by Formula 1. Here, the acyl group may be substituted or unsubstituted.

[Formula 1]

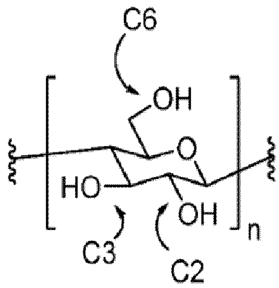

where n is an integer of 1 or more.

Substituent groups for the cellulose ester polymer or the acyl group may include at least one selected from among a halogen, a nitro group, an alkyl group (for example, a $C_1$ to $C_{20}$ alkyl group), an alkenyl group (for example, a $C_2$ to $C_{20}$ alkenyl group), a cycloalkyl group (for example, a $C_3$ to $C_{10}$ cycloalkyl group), an aryl group (for example, a $C_6$ to $C_{20}$ aryl group), a heteroaryl group (for example, a $C_3$ to $C_{10}$ heteroaryl group), an alkoxy group (for example, a $C_1$ to $C_{20}$ alkoxy group), an acyl group, and a halogen-containing functional group. The substituent groups may be the same as or different from each other.

Herein, "acyl" may mean R-C(=O)-* (* being a linking site, R being a $C_1$ to $C_{20}$ alkyl group, a $C_3$ to $C_{20}$ cycloalkyl group, a $C_6$ to $C_{20}$ aryl group, or a $C_7$ to $C_{20}$ arylalkyl group), as well known to those skilled in the art. The "acyl" is coupled to a ring of the cellulose through ester bonding (through an oxygen atom) in the cellulose.

Here, "alkyl", "alkenyl", "cycloalkyl", "aryl", "heteroaryl", "alkoxy", and "acyl" refer to non-halogen compounds free from a halogen for convenience. The composition for the first retardation layer may include the cellulose ester polymer alone or a mixture including the cellulose ester polymer.

Here, "halogen" means fluorine (F), Cl, Br, or I, preferably F.

The "halogen-containing functional group" is an organic functional group containing at least one halogen and may include an aromatic, aliphatic or alicyclic functional group. For example, the halogen-containing functional group may mean a halogen-substituted $C_1$ to $C_{20}$ alkyl group, a halogen-substituted $C_2$ to $C_{20}$ alkenyl group, a halogen-substituted $C_2$ to $C_{20}$ alkynyl group, a halogen-substituted $C_3$ to $C_{10}$ cycloalkyl group, a halogen-substituted $C_1$ to $C_{20}$ alkoxy group, a halogen-substituted acyl group, a halogen-substituted $C_6$ to $C_{20}$ aryl group, or a halogen-substituted $C_7$ to $C_{20}$ arylalkyl group, without being limited thereto.

The "halogen-substituted acyl group" may be R'-C(=O)-* (* being a linking site, R' being a halogen-substituted $C_1$ to $C_{20}$ alkyl group, a halogen-substituted $C_3$ to $C_{20}$ cycloalkyl group, a halogen-substituted $C_6$ to $C_{20}$ aryl group, or a halogen-substituted $C_7$ to $C_{20}$ arylalkyl group). The "halogen-substituted acyl group" may be coupled to a ring of the cellulose through ester bonding (through an oxygen atom) in the cellulose.

The cellulose ester polymer may be prepared by a typical method known to those skilled in the art or may be obtained from commercially available products. For example, the cellulose ester polymer having an acyl group as a substituent group may be prepared by reacting trifluoroacetic acid or trifluoroacetic anhydride with the sugar monomer constituting the cellulose represented by Formula 1 or a polymer of the sugar monomer, by reacting trifluoroacetic acid or trifluoroacetic anhydride therewith, followed by additionally reacting an acylation agent (for example, an anhydride of carboxylic acid, or carboxylic acid) therewith, or by reacting both trifluoroacetic acid or trifluoroacetic anhydride and the acylation agent therewith.

The polystyrene compound may include a moiety represented by Formula 2.

[Formula 2]

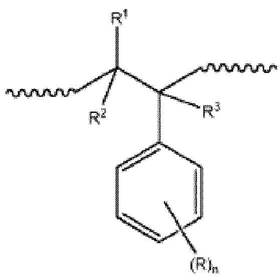

where

is a linking site of an element; $R^1$, $R^2$ and $R^3$ are each independently a hydrogen atom, an alkyl group, a substituted alkyl group, or a halogen; Rs are each independently an alkyl group, a substituted alkyl group, a halogen, a hydroxyl group, a carboxyl group, a nitro group, an alkoxy group, an amino group, a sulfonate group, a phosphate group, an acyl group, a acyloxy group, a phenyl group, an alkoxy carbonyl group, or a cyano group; and n is an integer of 0 to 5.

The polystyrene polymer may be a halogen-containing polystyrene polymer. In Formula 2, at least one of $R^1$, $R^2$ and $R^3$ may be a halogen and/or at least one R may be a halogen. In one embodiment, the halogen means fluorine (F), Cl, Br I, preferably F.

The halogen-containing polystyrene polymer may be prepared by, for example, polymerizing a mixture including at least one of 1-(2,2-difluoroethenyl)-2-fluorobenzene or 1',2',2'-trifluorostyrene. The mixture may further include styrene.

The first retardation layer may have a thickness of 1 μm to 10 μm, specifically 2 μm to 7 μm, more specifically 3 μm to 5 μm. Within this range, the first retardation layer can be used in the polarizing plate and can help improve the bending suppression effect.

The second retardation layer may have a greater thickness than the first retardation layer. The second retardation layer may have a greater shrinkage rate and/or shrinkage force than the first retardation layer. With this structure, the polarizing plate can easily improve bending resistance.

The second retardation layer may have a thickness of 20 μm to 80 μm, specifically 30 μm to 60 μm. Within this range, the second retardation layer can be used in the polarizing plate and can help improve the bending suppression effect.

The second retardation layer may have a shrinkage force of 0.04 N to 0.1 N, for example, 0.04 N, 0.05 N, 0.06 N, 0.07 N, 0.08 N, 0.09 N, or 0.1 N, specifically 0.05 N to 0.07 N. The second retardation layer may have a shrinkage rate of 0.15% to 0.30%, specifically 0.18% to 0.25%. Within this range, the polarizing plate can maintain a retardation value that secures diagonal compensation even upon shrinkage due to heat.

The second retardation layer may be a stretched film of a non-liquid crystal layer. Accordingly, it is advantageous for the second retardation layer to increase the in-plane retardation at a wavelength of 550 nm, as compared to the first retardation layer described above. In one embodiment, the second retardation layer may be formed through MD or TD uniaxial stretching, MD and TD biaxial stretching, or oblique stretching of an unstretched film for the second retardation layer. Preferably, the second retardation layer may be formed through MD uniaxial stretching of the unstretched film for the second retardation layer. For example, the second retardation layer may be formed through dry or wet stretching of the unstretched film for the second retardation layer to 5 to 8 times an initial length thereof.

The second retardation layer has a slow axis and a fast axis in the in-plane direction, in which the slow axis of the second retardation layer may be substantially parallel to the light absorption axis of the polarizer. Here, "substantially parallel" may mean that when the light absorption axis of the polarizer is 0°, the slow axis of the second retardation layer may be tilted at an angle of -5° and +5°, preferably -1° and +1°, more preferably 0°, with respect to the light absorption axis. This structure can facilitate the diagonal compensation effect of the polarizing plate. The first adhesive layer described below can facilitate suppression of bending of the polarizing plate having the aforementioned axial relationship.

The second retardation layer may include a polymer having a positive (+) intrinsic birefringence. Here, the positive intrinsic birefringence means that the index of refraction of the corresponding film increases in the stretching direction (MD). For example, the second retardation layer may include a norbornene polymer, such as a cyclic olefin polymer (COP), a cyclic olefin copolymer (COC), and the like, a cellulose polymer, such as triacetylcellulose (TAC) and the like.

The shrinkage force and/or the shrinkage rate of the second retardation layer may be realized by adjusting a composition for the second retardation layer, an elongation ratio upon stretching of an unstretched film for the second retardation layer, a stretching temperature, a thickness, and the like when forming the second retardation layer, and methods for adjusting these factors are well known to those skilled in the art. In one embodiment, the second retardation layer may be formed by melt extrusion of the composition for the second retardation layer to produce an unstretched film, followed by stretching the film, or by preparing an unstretched film through solution casting, followed by stretching the film.

The present invention improves the bending suppression effect of the polarizing plate, which includes two retardation layers (the first retardation layer and the second retardation layer) stacked on a lower surface of the polarizer by forming a first adhesive layer having certain ranges of storage modulus and a glass transition temperature between the first retardation layer and the second retardation layer, when the first retardation layer and the second retardation layer have different shrinkage rates and/or different shrinkage force. In particular, when the second retardation layer has a higher shrinkage rate and/or higher shrinkage force than the first retardation layer and is placed farther away from the polarizer than the first retardation layer, the first adhesive layer has an excellent effect in improvement of the bending suppression effect of the polarizing plate.

## First adhesive layer

The first adhesive layer is directly stacked on each of the first retardation layer and the second retardation layer. As used herein, "directly stacked" means that another optical layer, another first adhesive layer, or another adhesive layer is not present between the first retardation layer and the first adhesive layer, or between the second retardation layer and the first adhesive layer. Accordingly, the laminate of the first retardation layer, the first adhesive layer, and the second retardation layer may be a three-layer laminate.

The first adhesive layer has a storage modulus of 4 x $10^4$ Pa to 10 x $10^4$ Pa at 25°C and a glass transition temperature of -60°C to -35°C. When the first adhesive layer satisfies both the storage modulus at 25°C and the glass transition temperature within these ranges, the first adhesive layer can relieve shrinkage as an interlayer adhesive between the first retardation layer and the second retardation layer, thereby improving the bending suppression effect of the polarizing plate, in which the first retardation layer and the second retardation layer are stacked on a lower surface of the polarizer.

If the glass transition temperature of the first adhesive layer is less than - 60°C even when the first adhesive layer satisfies the modulus of the present invention, the polarizing plate can exhibit an insignificant bending suppression effect or the first adhesive layer can exhibit deterioration in adhesive strength, thereby making it difficult to adhesively attach the first retardation layer to the second retardation layer. If the glass transition temperature of the first adhesive layer exceeds -35°C even when the first adhesive layer satisfies the modulus of the present invention, the polarizing plate can exhibit an insignificant bending suppression effect or the first adhesive layer can exhibit deterioration in adhesive strength, thereby making it difficult to adhesively attach the first retardation layer to the second retardation layer.

If the modulus of the first adhesive layer is less than 4 x $10^4$ Pa at 25°C even when the first adhesive layer satisfies the glass transition temperature of the present invention, the polarizing plate can exhibit an insignificant bending suppression effect or it can be difficult for the first adhesive layer to bond the first retardation layer to the second retardation layer. If the modulus of the first adhesive layer exceeds 10 x $10^4$ Pa at 25°C even when the first adhesive layer satisfies the glass transition temperature of the present invention, the polarizing plate can exhibit an insignificant bending suppression effect or the first adhesive layer becomes too hard to bond the first retardation layer to the second retardation layer.

Preferably, the first adhesive layer has a modulus of 5 x $10^4$ Pa to 9 x $10^4$ Pa at 25°C and a glass transition temperature of -50°C to -40°C. Within this range, the polarizing plate can exhibit an excellent bending suppression effect and the first adhesive layer can be easily formed.

The first adhesive layer may have a thickness, which is greater than the thickness of the first retardation layer and smaller than the thickness of the second retardation layer. For example, the first adhesive layer may have a thickness of 5 μm to 30 μm, preferably 10 μm to 20 μm. Within this range, the first adhesive layer can be used in the polarizing plate.

The first adhesive layer may have any composition so long as the first adhesive layer can realize the modulus at 25°C and the glass transition temperature within the above ranges. Preferably, the first adhesive layer is formed of a thermosetting adhesive, preferably a pressure sensitive adhesive (PSA). The pressure sensitive adhesive can facilitate realization of the modulus at 25°C and the glass transition temperature within the above ranges. Preferably, the first adhesive layer is a (meth)acrylic adhesive layer. In this case, the first adhesive layer can facilitate realization of the modulus at 25°C and the glass transition temperature within the above ranges.

In one embodiment, the first adhesive layer may be formed of a composition for the first adhesive layer including a (meth)acrylic adhesive resin and a curing agent.

The (meth)acrylic adhesive resin may include a (meth)acrylic copolymer of a monomer mixture including a (meth) acrylic monomer having an alkyl group and a (meth)acrylic monomer having a crosslinkable functional group.

The (meth)acrylic monomer having an alkyl group may be a (meth)acrylate having an unsubstituted straight or branched $C_1$ to $C_{20}$ alkyl group at an ester site thereof and may include at least one selected from among methyl (meth) acrylate, ethyl (meth)acrylate, propyl (meth)acrylate, n-butyl (meth)acrylate, iso-butyl (meth)acrylate, pentyl (meth) acrylate, hexyl (meth)acrylate, 2-ethylhexyl (meth)acrylate, heptyl (meth)acrylate, octyl (meth)acrylate, iso-octyl (meth)acrylate, nonyl (meth)acrylate, decyl (meth)acrylate, and dodecyl (meth)acrylate.

The (meth)acrylic monomer having a crosslinkable functional group may include at least one of a hydroxyl group-containing (meth)acrylic monomer or a carboxylic acid group-containing (meth)acrylic monomer. Preferably, the (meth) acrylic monomer having a crosslinkable functional group includes a hydroxyl group-containing (meth)acrylic monomer to improve adhesion of the first adhesive layer through reaction with the curing agent.

The hydroxyl group-containing (meth)acrylic monomer may be a (meth)acrylate having a $C_1$ to $C_{20}$ alkyl group and one or more hydroxyl groups at an ester site thereof. Specifically, the hydroxyl group-containing (meth)acrylic monomer may include at least one selected from among 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, and 1-chloro-2-hydroxypropyl (meth)acrylate. These monomers may be used alone or as a mixture thereof.

The monomer mixture may include 60 wt% to 99%, for example, 60, 61, 62, 63, 64, 65, 66, 67, 68, 69, 70, 71, 72,

73, 74, 75, 76, 77, 78, 79, 80, 81, 82, 83, 84, 85, 86, 87, 88, 89, 90, 91, 92, 93, 94, 95, 96, 97, 98, or 99 wt%, preferably 80 wt% to 99 wt%, of the (meth)acrylic monomers having an alkyl group, and 1 wt% to 40 wt%, for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 wt%, preferably 1 wt% to 20 wt%, of the (meth)acrylic monomer having a crosslinkable functional group. Within this range, the composition for the first adhesive layer can easily realize the modulus at 25°C and the glass transition temperature within the above ranges.

The (meth)acrylic monomer having an alkyl group and the (meth)acrylic monomer having a crosslinkable functional group may be present in a total amount of 90 wt% or more, for example, 90, 91, 92, 93, 94, 95, 96, 97, 98, 99, or 100 wt%, specifically 95 wt% to 100 wt%, more specifically 100 wt%, in the monomer mixture. Within this range, the polarizing plate can easily realize the effects of the present invention.

The (meth)acrylic copolymer may be prepared by a typical method known to those skilled in the art.

The curing agent may be a heat curing agent and may include at least one selected from among an isocyanate curing agent, an epoxy curing agent, a metal chelate curing agent, an aziridine curing agent, and a carbodiimide curing agent, preferably, an isocyanate curing agent.

The isocyanate curing agent may include hexamethylene diisocyanate, toluene diisocyanate including 2,4-toluene diisocyanate, 2,6-toluene diisocyanate, and the like, xylylene diisocyanate including 4,4'-methylenediphenyl diisocyanate, 1,3-xylylene diisocyanate, 1,4-xylylene diisocyanate, and the like, hydrogenated toluene diisocyanate, isophorone diisocyanate, 1,3-bis(isocyanatomethyl)cyclohexane, tetramethylxylene diisocyanate, 1,5-naphthalene diisocyanate, 2,2,4-trimethylhexamethylene diisocyanate, 2,4,4-trimethylhexamethylene diisocyanate, adducts of any of these isocyanate curing agents, such as toluene diisocyanate adducts of trimethylolpropane including a trimer adduct of trimethylolpropane/toluene diisocyanate and the like, xylylene diisocyanate adducts of trimethylolpropane, triphenylmethane triisocyanate or methylene bis(triisocyanate), and the like.

The curing agent may be present in an amount of 0.01 parts by weight to 0.1 parts by weight, for example 0.01, 0.02, 0.03, 0.04, 0.05, 0.06, 0.07, 0.08, 0.09, or 0.1 parts by weight, preferably 0.02 parts by weight to 0.06 parts by weight, relative to 100 parts by weight of the (meth)acrylic adhesive resin. Within this range, the curing agent can make it easy to realize the modulus at 25°C and glass transition temperature of the first adhesive layer within the above ranges.

The composition may further comprise a silane coupling agent. The silane coupling agent may be selected from any type of silane coupling agent known to those skilled in the art and may include, for example, at least one selected from among an acetylacetonate silane coupling agent, an acetoacetate silane coupling agent, and an epoxy silane coupling agent. The silane coupling agent may be present in an amount of 0.1 to 1 part by weight, specifically 0.1 to 0.5 parts by weight, relative to 100 parts by weight of the (meth)acrylic adhesive resin. Within this range, the composition can further improve adhesion of the first adhesive layer.

The composition for the first adhesive layer may be a solvent-free composition. Alternatively, the composition for the first adhesive layer may further include a solvent. When the composition includes a solvent, the first adhesive layer can be formed to a thin thickness and the composition can have improved coatability. The solvent may be selected from any typical solvents known to those skilled in the art. For example, the solvent may include at least one selected from among methyl ethyl ketone, ethyl acetate, and toluene.

The first adhesive layer may be formed by any typical method known to those skilled in the art. For example, the first adhesive layer may be formed by depositing the composition for the first adhesive layer to a predetermined thickness on one surface of a base film, followed by drying and curing.

The polarizing plate may further include a first protective layer between the polarizer and the first retardation layer or between the polarizer and the second retardation layer. The first protective layer may be present singularly or in plural in the polarizing plate.

## First protective layer

The first protective layer may be stacked on the lower surface of the polarizer to increase mechanical strength of the polarizing plate. Alternatively, the first protective layer may include a base film for forming the first retardation layer.

The first protective layer may have an in-plane retardation of 10 nm or less, for example, 0 nm to 10 nm, or 0 nm to 5 nm, at a wavelength of 550 nm. Within this range, the first protective layer does not affect the diagonal compensation effect by the first retardation layer and the second retardation layer.

The first protective layer may have a lower shrinkage rate and/or lower shrinkage force than the second retardation layer. The first protective layer may be disposed closer to the polarizer than the first retardation layer and the second retardation layer. With this structure, the polarizing plate can achieve further improvement in bending suppression effect.

In one embodiment, the first protective layer may have a shrinkage force of 0.05 N to 1.0 N, for example, 0.05 N, 0.1 N, 0.2 N, 0.3 N, 0.4 N, 0.5 N, 0.6 N, 0.7 N, 0.8 N, 0.9 N, or 1.0 N, specifically 0.1 N to 0.5 N. Within this range, the polarizing plate can easily secure the bending suppression effect. The first protective layer may have a shrinkage rate of

0.05% to 0.20%, for example, 0.05, 0.06, 0.07, 0.08, 0.09, 0.1, 0.11, 0.12, 0.13, 0.14, 0.15, 0.16, 0.17, 0.18, 0.19, or 0.20%, specifically 0.10% to 0.15%. Within this range, the polarizing plate can easily secure the bending suppression effect.

The first protective layer may have a thickness of 25 μm to 80 μm, preferably 30 μm to 60 μm. Within this range, the first protective layer can be used in the polarizing plate.

The first protective layer may be a coating layer or film of a liquid crystal layer or a non-liquid crystal layer. For example, the first protective layer may be an optically transparent film. Specifically, the first protective layer may include a film formed of at least one selected from among cellulose ester resins including triacetylcellulose (TAC) and the like, polyester resins including polyethylene terephthalate (PET), polybutylene terephthalate, polyethylene naphthalate, polybutylene naphthalate, and the like, cyclic polyolefin resins, polycarbonate resins, polyether sulfone resins, polysulfone resins, polyamide resins, polyimide resins, polyolefin resins, polyarylate resins, polyvinyl alcohol resins, polyvinyl chloride resins, and polyvinylidene chloride resins.

The first protective layer may be bonded to the polarizer by a bonding layer or an adhesive layer. The bonding layer or the adhesive layer may be formed of a thermosetting or photo-curable adhesive composition. The bonding layer or the adhesive layer may have a thickness of 1 μm to 30 μm, for example, 2 μm to 10 μm, for example, 2 μm to 3 μm.

A second adhesive layer may be further stacked between the first protective layer and the first retardation layer.

## Second adhesive layer

The second adhesive layer serves to increase strength of the polarizing plate by adhesively attaching the first protective layer and the first retardation layer to each other or by adhesively attaching the first protective layer and the second retardation layer to each other.

The second adhesive layer may be formed of a composition for the second adhesive layer including a (meth)acrylic adhesive resin and a curing agent.

The (meth)acrylic adhesive resin may include a (meth)acrylic copolymer of a monomer mixture including a (meth)acrylic monomer having an alkyl group and a (meth)acrylic monomer having a crosslinkable functional group.

Details of the (meth)acrylic monomer having an alkyl group, the (meth)acrylic monomer having a crosslinkable functional group, and the curing agent are the same as those described with respect to the first adhesive layer.

The monomer mixture may include 60 wt% to 99 wt%, preferably 80 wt% to 99 wt%, of the (meth)acrylic monomer having an alkyl group, and 1 wt% to 40 wt%, preferably 1 wt% to 20 wt%, of the (meth)acrylic monomer having a crosslinkable functional group. Within this range, the composition can secure adhesion of the second adhesive layer.

The curing agent may be present in an amount of 0.01 parts by weight to 0.1 parts by weight, preferably 0.02 parts by weight to 0.06 parts by weight, relative to 100 parts by weight of the (meth)acrylic adhesive resin. Within this range, it is easy to secure adhesion of the second adhesive layer.

The composition may further comprise a silane coupling agent. The silane coupling agent may be selected from any type of silane coupling agent known to those skilled in the art and may include, for example, at least one selected from among an acetylacetonate silane coupling agent, an acetoacetate silane coupling agent, and an epoxy silane coupling agent. The silane coupling agent may be present in an amount of 0.1 to 1 part by weight, specifically 0.1 to 0.5 parts by weight, relative to 100 parts by weight of the (meth)acrylic adhesive resin. Within this range, the composition can further improve adhesion of the second adhesive layer.

The composition for the second adhesive layer may be a solvent free composition. Alternatively, the composition for the second adhesive layer may further include a solvent. When the composition includes a solvent, the second adhesive layer can be formed to a thin thickness and the composition can have improved coatability. The solvent may be selected from any typical solvents known to those skilled in the art. For example, the solvent may include at least one selected from among methyl ethyl ketone, ethyl acetate, and toluene.

The second adhesive layer may have a thickness of 15 μm to 35 μm, specifically 20 μm to 30 μm. Within this range, the second adhesive layer can be used in the polarizing plate.

The polarizing plate may further include a second protective layer stacked on the other surface of the polarizer. The second protective layer may be present singularly or in plural in the polarizing plate.

## Second protective layer

The second protective layer is disposed on a light exit surface of the polarizer and can further improve image quality or protect the polarizer by acting on light emitted from the polarizer.

The second protective layer may include a protective film or a protective coating layer.

The protective film may be an optically transparent film and may include a film formed of at least one selected from among cellulose ester resins including triacetylcellulose (TAC) and the like, polyester resins including polyethylene terephthalate (PET), polybutylene terephthalate, polyethylene naphthalate, polybutylene naphthalate, and the like, cyclic polyolefin resins, polycarbonate resins, polyether sulfone resins, polysulfone resins, polyamide resins, polyimide resins,

polyolefin resins, polyarylate resins, polyvinyl alcohol resins, polyvinyl chloride resins, and polyvinylidene chloride resins. Specifically, the protective film may be a TAC film or a PET film. The protective coating layer may be formed of at least one of a thermosetting composition for coating layers or a photocurable composition for coating layers.

In one embodiment, the second protective layer may be a retardation film.

In one embodiment, the second protective layer may have an in-plane retardation (Re) of 3,000 nm or more, specifically 5,000 nm to 15,000 nm, more specifically 5,000 nm to 12,000 nm, at a wavelength of 550 nm. Within this range, the polarizing plate can secure a frontal contrast improvement effect, a rainbow mura suppression effect, and the like.

In one embodiment, the second protective layer may have an out-of-plane retardation (Rth) of 6,000 nm or more, specifically 6,000 nm to 15,000 nm, more specifically 6,000 nm to 12,000 nm, at a wavelength of 550 nm. Within this range, the polarizing plate can secure an effect of controlling speckles by birefringence, an effect of improving viewing angle characteristic in a liquid crystal display, and the like.

In one embodiment, the second protective layer may have a degree of biaxiality (NZ) of 2.5 or less, specifically 1.0 to 2.2, more specifically 1.2 to 2.0, most specifically 1.4 to 1.8, at a wavelength of 550 nm. Within this range, the polarizing plate can secure an effect of controlling speckles by birefringence, an effect of maintaining mechanical strength of the film, and the like.

In one embodiment, the second protective layer may be a film formed of the material described above and stretched at a predetermined stretching ratio. The protective layer may have a slow axis and a fast axis in the in-plane direction thereof.

In one embodiment, an axis of the second protective layer having a lower index of refraction in the in-plane direction may correspond to the machine direction (MD) of the second protective layer and an axis of the second protective layer having a higher index of refraction in the in-plane direction may correspond to the transverse direction (TD) of the second protective layer. In this case, the second protective layer may be a TD uniaxially stretched protective film.

In another embodiment, the axis of the second protective layer having a lower index of refraction in the in-plane direction may correspond to the transverse direction (TD) of the second protective layer and the axis of the second protective layer having a higher index of refraction in the in-plane direction may correspond to the machine direction (MD) of the second protective layer. In this case, the second protective layer may be an MD uniaxially stretched protective film.

In another embodiment, the axis of the second protective layer having a lower index of refraction in the in-plane direction may correspond to an inclined direction with respect to the transverse direction of the second protective layer and the axis of the second protective layer having a higher index of refraction in the in-plane direction may correspond to an inclined direction with respect to the machine direction (MD) of the second protective layer. In this case, the second protective layer may be an MD/TD biaxially stretched film or an MD/ TD biaxially stretched coating layer.

In one embodiment, the second protective layer may include a TD uniaxially stretched protective film to have the axis having a lower index of refraction and the axis having a higher index of refraction in the in-plane direction.

In TD uniaxial stretching, a stretched film may be prepared by a method including the step of stretching a melt extruded resin for an unstretched film to 100% to 200%, preferably 120% to 140%, of an initial length thereof only in the TD direction. Stretching may be performed by dry stretching and/or wet stretching and may be performed at a temperature of (Tg - 20)°C to (Tg + 50)°C, specifically from 70°C to 250°C, more specifically from 80°C to 200°C, more specifically from 100°C to 200°C, with reference to the glass transition temperature Tg of the resin for the protective film. Within this range, stretching can uniformly achieve the same stretching effect.

The second protective layer may have a thickness of 100 μm or less, specifically greater than 0 μm and less than or equal to 100 μm, more specifically 10 μm to 90 μm. Within this range, the second protective layer can be used in the polarizing plate.

The second protective layer may further include a functional coating layer formed on at least one surface thereof. The functional coating layer may include a hard-coating layer, an anti-fingerprint layer, an anti-reflection layer, a low reflectivity layer, an antiglare layer, a primer layer, or the like.

The second protective layer may be bonded to the polarizer by a bonding layer or an adhesive layer. The bonding layer or the adhesive layer may be formed of a photocurable or thermosetting bonding agent or a photocurable or thermosetting adhesive. The bonding layer or the adhesive layer may have a thickness of 1 μm to 30 μm, for example, 2 μm to 10 μm, or 2 μm to 3 μm.

The polarizing plate may further include a second retardation layer or a third adhesive layer stacked on a lower surface of the first retardation layer.

## Third adhesive layer

The third adhesive layer serves to adhesively attach the polarizing plate to the optical display panel.

The third adhesive layer may be formed of a composition for the third adhesive layer including a (meth)acrylic adhesive resin and a curing agent.

The (meth)acrylic adhesive resin may include a (meth)acrylic copolymer of a monomer mixture including a (meth)acrylic monomer having an alkyl group and a (meth)acrylic monomer having a crosslinkable functional group.

Details of the (meth)acrylic monomer having an alkyl group, the (meth)acrylic monomer having a crosslinkable functional group, and the curing agent are the same as those described in the first adhesive layer.

The monomer mixture may include 60 wt% to 99 wt%, preferably 80 wt% to 99 wt%, of the (meth)acrylic monomer having an alkyl group, and 1 wt% to 40 wt%, preferably 1 wt% to 20 wt%, of the (meth)acrylic monomer having a crosslinkable functional group. Within this range, the composition can secure adhesion of the third adhesive layer.

The curing agent may be present in an amount of 0.01 parts by weight to 0.1 parts by weight, preferably 0.02 parts by weight to 0.06 parts by weight, relative to 100 parts by weight of the (meth)acrylic adhesive resin. Within this range, it is easy to secure adhesion of the third adhesive layer.

The composition may further comprise a silane coupling agent. The silane coupling agent may be selected from any type of silane coupling agent known to those skilled in the art and may include, for example, at least one selected from among an acetylacetonate silane coupling agent, an acetoacetate silane coupling agent, and an epoxy silane coupling agent. The silane coupling agent may be present in an amount of 0.1 to 1 part by weight, specifically 0.1 to 0.5 parts by weight, relative to 100 parts by weight of the (meth)acrylic adhesive resin. Within this range, the composition can further improve adhesion of the third adhesive layer.

The composition for the third adhesive layer may be a solvent free composition. Alternatively, the composition for the third adhesive layer may further include a solvent. When the composition includes a solvent, the third adhesive layer can be formed to a thin thickness and the composition can exhibit improved coatability. The solvent may be selected from any typical solvents known to those skilled in the art. For example, the solvent may include at least one selected from among methyl ethyl ketone, ethyl acetate, and toluene.

The third adhesive layer may have a thickness of 15 μm to 35 μm, specifically 20 μm to 30 μm. Within this range, the third adhesive layer can be used in the polarizing plate.

FIG. 1 to FIG. 3 are cross-sectional views of polarizing plates according to embodiments of the present invention.

Referring to FIG. 1, the polarizing plate may include: a polarizer 10; a first protective layer 20, a first retardation layer 30, a first adhesive layer 40, and a second retardation layer 50 sequentially stacked on a lower surface of the polarizer 10; and a second protective layer 60 stacked on an upper surface of the polarizer 10.

Referring to FIG. 2, the polarizing plate may include: a polarizer 10; a first protective layer 20, a second adhesive layer 70, a first retardation layer 30, a first adhesive layer 40, and a second retardation layer 50 sequentially stacked on a lower surface of the polarizer 10; and a second protective layer 60 stacked on an upper surface of the polarizer 10.

Referring to FIG. 3, the polarizing plate may include: a polarizer 10; a first protective layer 20, a second adhesive layer 70, a first retardation layer 30, a first adhesive layer 40, a second retardation layer 50, and a third adhesive layer 80 sequentially stacked on a lower surface of the polarizer 10; and a second protective layer 60 stacked on an upper surface of the polarizer 10.

In one embodiment, the polarizing plate may have a shrinkage force of 3.05 N or less and a shrinkage rate of 0.3% or less. Within this range, the polarizing plate can advantageously provide the bending suppression effect.

An optical display device according to the present invention includes the polarizing plate according to the present invention. In one embodiment, the optical display device may include a vertical alignment liquid crystal display, for example, an IPS or FFS liquid crystal display.

The liquid crystal display includes a liquid crystal panel, the polarizing plate according to the present invention stacked on a light exit surface of the liquid crystal panel, and a polarizing plate (light source-side polarizing plate) disposed on a light incidence surface of the liquid crystal panel. The polarizing plate disposed on the light incidence surface may include a polarizing plate typically known to those skilled in the art. The polarizing plate according to the present invention may be used as a viewer-side polarizing plate. However, it should be understood that the present invention is not limited thereto and the polarizing plate according to the present invention may be applied as a viewer-side polarizing plate or a light source-side polarizing plate.

In the liquid crystal panel, alignment of liquid crystals is changed depending on application and non-application of voltage to allow light emitted from a light source to be emitted therethrough.

The liquid crystal panel may include a pair of substrates and a liquid crystal layer as a display medium interposed between the substrates. The substrate at one side (color filter substrate) may be provided with a color filter and a black matrix, and the substrate at the other side (active matrix substrate) may be provided with a switching element (for example, TFT) configured to control electrical and optical properties of the liquid crystals, and with pixel lines and signal lines that provide gate signals to the switching element, without being limited thereto.

In one embodiment, the liquid crystal panel may employ IPS or FFS. With this structure, the liquid crystal display can achieve improvement in viewing angle.

The liquid crystal display includes a light source on a lower surface of the light-source side polarizing plate. The light source may include a light source having a continuous light emission spectrum. For example, the light source may include a white LED light source, a quantum dot (QD) light source, a metal fluoride red phosphor light source, specifically a light source containing KSF ($K_2SiF_6:Mn^{4+}$) phosphors, KTF ($K_2TiF_6:Mn^{4+}$) phosphors, or the like.

Next, the present invention will be described in more detail with reference to some examples. However, it should be noted that these examples are provided for illustration only and are not to be construed in any way as limiting the invention.

## Example 1

### (1) Preparation of polarizer

A polyvinyl alcohol film (TS4500, thickness: 45 μm, Kuraray) washed with water at 25°C was swollen in a swelling bath at 30°C. After passing through the swelling bath, the film was dyed at 30°C in a dyeing bath of an aqueous solution containing 1 mol/ml of potassium iodide and 1 wt% of boric acid for 65 seconds. After passing through the dyeing bath, the film was stretched to an MD uniaxial stretching ratio of 5.7 times an initial length thereof in a wet stretching bath of an aqueous solution containing 3 wt% of boric acid at 60°C. After passing through the wet stretching bath, the film was left at 25°C in a crosslinking bath of an aqueous solution containing 3 wt% of boric acid for 65 seconds. After passing through the crosslinking bath, the film was left at 30°C for 10 seconds in a color correction bath of an aqueous solution containing 4.5 wt% of potassium iodide, which is a color correction liquid. The film having passed through the color correction bath was washed with water and dried, thereby preparing a polarizer (thickness: 18 μm).

### (2) Preparation of first adhesive layer

A composition for a first adhesive layer was prepared by mixing a (meth)acrylic adhesive resin (CI-247, a copolymer of a monomer mixture comprising n-butyl acrylate and a hydroxyl group-containing acrylic monomer as main components, Soken Co., Ltd.) and a curing agent. A first adhesive layer (thickness: 15 μm) was prepared by depositing the composition to a predetermined thickness on one surface of a release film, drying and heat treating the composition, and removing the release film.

### (3) Preparation of polarizing plate

A first retardation layer (positive C layer, Rth: -80 nm at a wavelength of 550 nm, thickness: 3.2 μm) was prepared by depositing a composition comprising a cellulosic ester (fluorine-containing, VM500, Eastman Co., Ltd.) on one surface of a release film, curing the composition, and removing the release film.

A cyclic olefin polymer (COP) film (ZM12, positive A layer, Re: 120 nm at a wavelength of 550 nm, NZ: 1.0, thickness: 46 μm, Zeon Co., Ltd.) prepared by MD uniaxial stretching was prepared as a second retardation layer. The second retardation layer had a shrinkage force of 0.06 N and a shrinkage rate of 0.19%. The second retardation layer had higher shrinkage force and higher shrinkage rate than the first retardation layer.

Each of a second adhesive layer (thickness: 25 μm) and a third adhesive layer (thickness: 25 μm) was formed by preparing a composition using a (meth)acrylic adhesive resin (CI-247, a copolymer of a monomer mixture comprising n-butyl acrylate and a hydroxyl group-containing acrylic monomer as main components, Soken Co., Ltd.) and a curing agent, depositing the composition onto a release film, and curing the composition, followed by removing the release film.

A photocurable bonding agent (epoxy resin bonding agent) was deposited on both surfaces of the prepared polarizer. A polyethylene terephthalate film (thickness: 85 μm, DSG-23PET(LR), DNP) having a low-reflectivity layer formed on an upper surface thereof was stacked as a second protective layer on an upper surface of the polarizer. A triacetylcellulose film (thickness: 40 μm, KC4CT1SW, Konica Co., Ltd.) was stacked as a first protective layer on a lower surface of the polarizer. A polarizing plate was prepared by stacking the second adhesive layer, the first retardation layer (+C), the first adhesive layer, the second retardation layer (+A), and the third adhesive layer on a lower surface of the first protective layer. The slow axis of the second retardation layer was parallel to the light absorption axis of the polarizer.

## Examples 2 and 3

Polarizing plates were prepared in the same manner as in Example 1 except that the content of the curing agent was changed in preparation of the first adhesive layer.

## Comparative Example 1

A polarizing plate was prepared in the same manner as in Example 1 except that the second protective layer, the polarizer, the first protective layer, and the second adhesive layer were sequentially stacked without the first retardation layer, the first adhesive layer, the second retardation layer, and the third adhesive layer.

**Comparative Example 2**

A cyclic olefin polymer (COP) film (ZM12, positive A layer, Re: 120 nm at a wavelength of 550 nm, NZ: 1.0, thickness: 46 μm, Zeon Co., Ltd.) prepared by MD uniaxial stretching was used as the second retardation layer.
A composition comprising a cellulosic ester (fluorine-containing, VM500, Eastman Co., Ltd.) was deposited on one surface of the second retardation layer and cured to prepare a laminate of the first retardation layer (positive C layer, Rth: -80 nm at a wavelength of 550 nm, thickness: 3.7 μm) and the second retardation layer.
A polarizing plate was prepared in the same manner as in Example 1 except that the second protective layer, the polarizer, the first protective layer, the second adhesive layer, the first retardation layer, the second retardation layer, and the third adhesive layer were sequentially stacked without the first adhesive layer. The first retardation layer was directly stacked on the second retardation layer between the first retardation layer and the second retardation layer without an adhesive layer.

**Comparative Example 3**

A transparent adhesive composition (OCA) comprising a partial polymer formed of a monomer mixture comprising 90 wt% of 2-ethylhexyl acrylate, 4 wt% of acryl amide, and 6 wt% of acrylic acid was prepared and subjected to photocuring, thereby preparing a transparent adhesive layer (thickness: 15 μm). In Comparative Example 3, a polarizing plate was prepared in the same manner as in Example 1 except that a transparent adhesive layer (OCA) was used instead of the first adhesive layer.

**Comparative Examples 4 to 7**

A first adhesive layer having storage modulus, glass transition temperature, and thickness as listed in Table 2 was prepared by changing the composition of the first adhesive layer in Example 1. Polarizing plates were prepared in the same manner as in Example 1 except that the first adhesive layer prepared above was used.

<u>Preparation of light source-side polarizing plate</u>

A polarizer was prepared by the same method as above. A triacetylcellulose (TAC) film (KC4CT1SW, thickness: 40 μm, Konica Minolta Opto Inc.) was bonded to an upper surface of the polarizer and a polyethylene terephthalate (PET) film (thickness: 80 μm, Re: 8400 nm, Rth: 9800 nm at a wavelength of 550 nm, Toyobo Co., Ltd.) was bonded to a lower surface of the polarizer, thereby preparing a light source-side polarizing plate.

<u>Preparation of liquid crystal module</u>

Each of the polarizing plates prepared in Examples and Comparative Examples was adhesively attached to a light exit surface of an IPS liquid crystal-containing liquid crystal panel via a third adhesive layer. A liquid crystal module was manufactured by adhesively attaching the prepared light source-side polarizing plate to a light incidence surface of the IPS liquid crystal-containing liquid crystal panel via an adhesive layer. Here, a TAC film of the light source-side polarizing plate was bonded to the liquid crystal panel.
The polarizing plates of Examples and Comparative Examples were evaluated as to the following properties listed in Tables 1 and 2.

(1) Storage modulus (G', unit: Pa) of first adhesive layer or OCA: A specimen having a circular cross-section with a thickness of 600 μm and a diameter of 8 mm was prepared by stacking a plurality of first adhesive layers having a thickness of 15 μm. Storage modulus was measured on the specimen at 25°C by a temperature sweep test using a storage modulus measurement instrument (ARES, Advanced Rheometry Expansion System, TA Instrument Inc.) under conditions of frequency: 1 Hz, strain: 5%, normal force: 100 N while heating the specimen from 0°C to 150°C at a heating rate of 10°C/min.
(2) Glass transition temperature (Tg, unit: °C) of first adhesive layer: Glass transition temperature of the first adhesive layer was measured using a DSC Discovery (TA Instrument Inc.) by heating a specimen prepared from 15 mg of the first adhesive layer to 100°C at a heating rate of 20°C/min in a nitrogen atmosphere (50 mL/min), cooling the specimen to -80°C, and heating the specimen to 100°C again at a heating rate of 10°C/min.
(3) Visibility at left and right (upper and lower) sides: A liquid crystal module was prepared from the polarizing plates prepared in Examples and Comparative Examples by the method described above. Using an EZ-Contrast XL-88, color coordinates (x, y) were obtained at each of (45°, 60°), (135°, 60°), and (315°, 60°) by specifying the left (or upper) (45°)/right (135°) or lower (315°) angles at a black color azimuth of 60°. A distance from (45°, 60°) to (135°, 60°) or

(315°,60°) was calculated as Δ(x, y). A lower Δ(x, y) value than that of Comparative Example 1 indicates good visibility.
(4) Shrinkage force of polarizing plate (unit: N): A rectangular specimen having a size of 30 mm x 3 mm (MD x TD of the polarizer) was prepared using each of the polarizing plates manufactured in Examples and Comparative Examples and was clamped at both ends thereof in the MD to both jigs of a TMA, followed by measuring shrinkage force of the rectangular specimen upon shrinking at 85°C for 3 hours.
(5) Shrinkage rate of polarizing plate (unit: %): A square specimen (60 mm x 60 mm) (MD x TD of the polarize) was prepared using each of the polarizing plates manufactured in Examples and Comparative Examples and was subjected to constant high temperature treatment at 60°C for 250 hours. The MD length of the specimen before the high temperature treatment and the MD length of the specimen after the high temperature treatment are measured using a dimensional measurement instrument and calculated according to the above equation.
(6) Bending (unit: mm): Each of the polarizing plates manufactured in Examples and Comparative Examples was cut into a rectangular specimen having a size of 219.8 mm x 124.15 mm (10.1 inch simulation size) (MD x TD of the polarize), which in turn was placed on a flat bottom surface such that the second protective layer became the uppermost layer. Then, after the specimen was left at 23°C for 2 hours, the maximum heights from the bottom surface to an edge of the specimen were measured three times at 8 points of the specimen and averaged. A bending value of less than 3 mm indicates improvement in suppression of light leakage.

Table 1

| | | Example | | |
|---|---|---|---|---|
| | | 1 | 2 | 3 |
| First adhesive layer or OCA | G' | 7 x $10^4$ | 5 x $10^4$ | 9 x $10^4$ |
| | Tg | -46 | -40 | -50 |
| | Thickness | 15 | 15 | 15 |
| Visibility at left and right (upper and lower) sides | | Good | Good | Good |
| Shrinkage force of polarizing plate | | 2.95 | 2.88 | 3.02 |
| Shrinkage rate of polarizing plate | | 0.26 | 0.25 | 0.27 |
| Bending | | 2.95 | 2.82 | 2.97 |

Table 2

| | | Comparative Example | | | | | | |
|---|---|---|---|---|---|---|---|---|
| | | 1 | 2 | 3 | 4 | 5 | 6 | 7 |
| First adhesive layer or OCA | G' | - | - | 4 x $10^5$ | 2 x $10^4$ | 3 x $10^5$ | 10 x $10^4$ | 8 x $10^4$ |
| | Tg | - | - | -28 | -60 | -35 | -62 | -32 |
| | Thickness | - | - | 15 | 7 | 15 | 10 | 15 |
| Visibility at left and right (upper and lower) side | | Poor | Good | Good | Good | Good | Good | Good |
| Shrinkage force of polarizing plate | | 3.34 | 5.80 | 3.32 | 3.18 | 3.37 | 3.07 | 3.41 |
| Shrinkage rate of polarizing plate | | 0.29 | 0.54 | 0.29 | 0.29 | 0.33 | 0.28 | 0.35 |
| Bending | | 3.21 | 5.8 | 3.19 | 3.10 | 3.29 | 3.08 | 3.47 |

As shown in Tables 1 and 2, the polarizing plates according to the present invention provided the diagonal compensation effect on side surfaces including the left and right sides and suppressed light leakage at an edge thereof by suppressing bending.

However, the effects of the present invention could not be achieved by all of the polarizing plates of Comparative Examples, each including a first adhesive layer failed to simultaneously satisfy the storage modulus and the glass

transition temperature of the present invention.

It should be understood that various modifications, changes, alterations, and equivalent embodiments can be made by those skilled in the art without departing from the spirit and scope of the present invention.

## Claims

1. A polarizing plate comprising: a polarizer; and a laminate of a first retardation layer, a first adhesive layer, and a second retardation layer stacked on one surface of the polarizer,
   wherein the first adhesive layer has a storage modulus of $4 \times 10^4$ Pa to $10 \times 10^4$ Pa at 25°C and a glass transition temperature of -60°C to -35°C.

2. The polarizing plate as claimed in claim 1, wherein the second retardation layer has a greater shrinkage rate or shrinkage force than the first retardation layer.

3. The polarizing plate as claimed in claim 2, wherein the second retardation layer has a shrinkage rate of 0.15% to 0.30% and a shrinkage force of 0.04 N to 0.1 N.

4. The polarizing plate as claimed in claim 1, wherein the second retardation layer is placed farther away from the polarizer than the first retardation layer.

5. The polarizing plate as claimed in claim 1, wherein the second retardation layer has a greater thickness than the first retardation layer.

6. The polarizing plate as claimed in claim 1, wherein the second retardation layer comprises a stretched film of a non-liquid crystal layer.

7. The polarizing plate as claimed in claim 1, wherein a slow axis of the second retardation layer is tilted at an angle of -5° to +5° with reference to a light absorption axis of the polarizer when the light absorption axis of the polarizer is 0°.

8. The polarizing plate as claimed in claim 1, wherein the second retardation layer comprises a polymer having a positive (+) intrinsic birefringence.

9. The polarizing plate as claimed in claim 8, wherein the second retardation layer comprises a cyclic olefin polymer (COP), cyclic olefin copolymer (COC), or triacetylcellulose (TAC) resin.

10. The polarizing plate as claimed in claim 1, wherein the first retardation layer comprises a liquid crystal layer or a non-liquid crystal layer.

11. The polarizing plate as claimed in claim 10, wherein the non-liquid crystal layer comprises a cellulose or polystyrene resin.

12. The polarizing plate as claimed in claim 1, wherein the first adhesive layer has a thickness of from 5 $\mu$m to 30 $\mu$m.

13. The polarizing plate as claimed in claim 1, wherein the first adhesive layer comprises a cured product of a composition for the first adhesive layer comprising a (meth)acrylic adhesive resin and a curing agent.

14. The polarizing plate as claimed in claim 13, wherein the (meth)acrylic adhesive resin comprises a (meth)acrylic copolymer of a monomer mixture comprising a (meth)acrylic monomer having an alkyl group and a (meth)acrylic monomer having a crosslinkable functional group, and
    the curing agent is present in an amount of 0.01 parts by weight to 0.1 parts by weight relative to 100 parts by weight of the (meth)acrylic adhesive resin.

15. The polarizing plate as claimed in claim 1, wherein the first retardation layer comprises a positive C layer and the second retardation layer comprises a positive A retardation layer.

16. The polarizing plate as claimed in claim 15, wherein the first retardation layer has an out-of-plane retardation of -110 nm to -60 nm at a wavelength of 550 nm, and the second retardation layer has an in-plane retardation of 100 nm to 150

nm and a degree of biaxiality of 0.9 to 1.2 at a wavelength of 550 nm.

**17.** The polarizing plate as claimed in claim 1, wherein the first retardation layer, the first adhesive layer, and the second retardation layer are sequentially stacked on one surface of the polarizer.

**18.** The polarizing plate as claimed in claim 17, further comprising:
a first protective layer stacked between the polarizer and the first retardation layer.

**19.** The polarizing plate as claimed in claim 18, wherein the first protective layer has a lower shrinkage rate or lower shrinkage force than the second retardation layer.

**20.** The polarizing plate as claimed in claim 19, further comprising:
a second protective layer stacked on the other surface of the polarizer.

**21.** The polarizing plate as claimed in claim 18, further comprising:
a second adhesive layer stacked between the first protective layer and the first retardation layer.

**22.** An optical display device comprising the polarizing plate as claimed in any one of claims 1 to 21.

【FIG. 1】

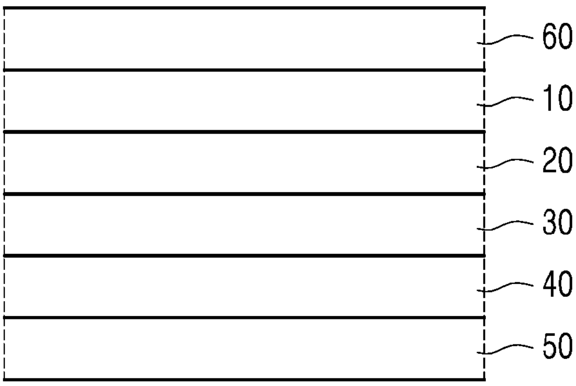


【FIG. 2】

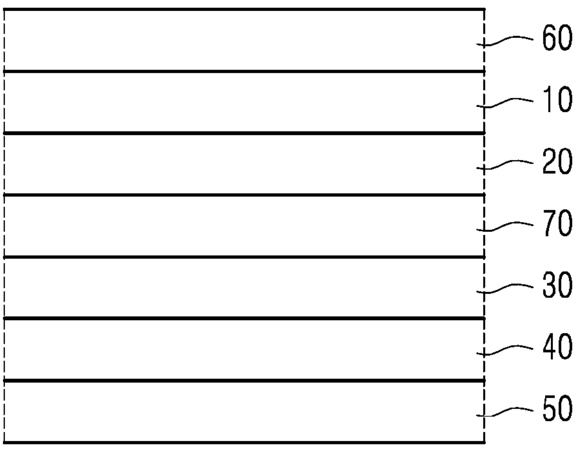

【FIG. 3】

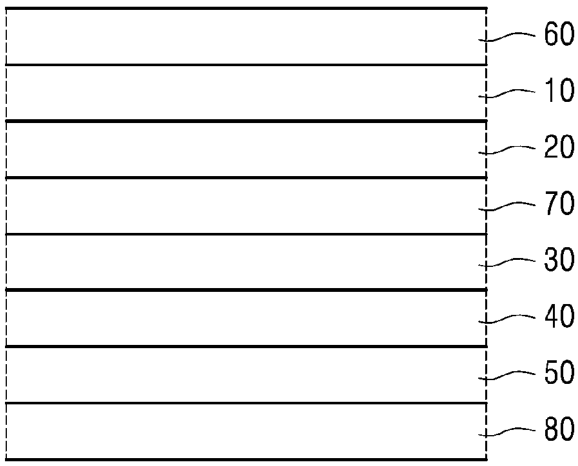

**INTERNATIONAL SEARCH REPORT**

International application No.
**PCT/KR2023/018031**

**A. CLASSIFICATION OF SUBJECT MATTER**

**G02B 5/30**(2006.01)i

According to International Patent Classification (IPC) or to both national classification and IPC

**B. FIELDS SEARCHED**

Minimum documentation searched (classification system followed by classification symbols)

G02B 5/30(2006.01); B32B 15/085(2006.01); B32B 27/00(2006.01); B32B 5/16(2006.01); C09J 7/22(2018.01); C09J 7/30(2018.01); G09F 9/00(2006.01); H10K 50/00(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편광자(polarizer), 위상차(phase difference), 점착체층(adhesive layer), 저장 모듈러스(storage modulus), 유리 전이 온도(glass transition temperature)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0051618 A (SAMSUNG SDI CO., LTD.) 12 May 2017 (2017-05-12) See paragraphs [0028]-[0033], [0043], [0047], [0054] and [0077]-[0078]; claims 3 and 10; and figure 2. | 1,4-5,8-9,12-14,17,22 |
| Y | | 2-3,6-7,10-11, 15-16,18-21 |
| Y | KR 10-2020-0018487 A (NITTO DENKO CORPORATION) 19 February 2020 (2020-02-19) See paragraphs [0016], [0067], [0074] and [0090]; and figure 1. | 2-3,7,15-16 |
| Y | KR 10-2021-0025012 A (NITTO DENKO CORPORATION) 08 March 2021 (2021-03-08) See paragraph [0111]; and figure 5. | 6,10-11,16,18-21 |
| A | WO 2021-153019 A1 (SUMITOMO CHEMICAL COMPANY, LIMITED) 05 August 2021 (2021-08-05) See claim 1; and figures 1-2. | 1-22 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/018031

C. DOCUMENTS CONSIDERED TO BE RELEVANT

| Category* | Citation of document, with indication, where appropriate, of the relevant passages | Relevant to claim No. |
|---|---|---|
| A | US 2006-0108065 A1 (WANG, Yongcai et al.) 25 May 2006 (2006-05-25)<br>See claim 1. | 1-22 |

Form PCT/ISA/210 (second sheet) (July 2022)

**INTERNATIONAL SEARCH REPORT**
**Information on patent family members**

International application No.
**PCT/KR2023/018031**

| Patent document cited in search report | Publication date (day/month/year) | Patent family member(s) | Publication date (day/month/year) |
|---|---|---|---|
| KR 10-2017-0051618 A | 12 May 2017 | CN 106896438 A | 27 June 2017 |
| | | CN 106896438 B | 24 March 2020 |
| | | KR 10-1854507 B1 | 04 May 2018 |
| KR 10-2020-0018487 A | 19 February 2020 | CN 110799869 A | 14 February 2020 |
| | | CN 110799869 B | 12 July 2022 |
| | | JP 2019-008252 A | 17 January 2019 |
| | | JP 6781111 B2 | 04 November 2020 |
| | | KR 10-2518911 B1 | 07 April 2023 |
| | | WO 2019-003503 A1 | 03 January 2019 |
| KR 10-2021-0025012 A | 08 March 2021 | CN 112334801 A | 05 February 2021 |
| | | CN 112334801 B | 25 July 2023 |
| | | JP 2020-003650 A | 09 January 2020 |
| | | JP 7184549 B2 | 06 December 2022 |
| | | US 2021-0260851 A1 | 26 August 2021 |
| | | WO 2020-003812 A1 | 02 January 2020 |
| WO 2021-153019 A1 | 05 August 2021 | CN 115023634 A | 06 September 2022 |
| | | JP 2021-121841 A | 26 August 2021 |
| | | KR 10-2022-0126778 A | 16 September 2022 |
| US 2006-0108065 A1 | 25 May 2006 | CN 101061395 A | 24 October 2007 |
| | | JP 2008-521055 A | 19 June 2008 |
| | | KR 10-2007-0073924 A | 10 July 2007 |
| | | US 2007-0272354 A9 | 29 November 2007 |
| | | WO 2006-057799 A1 | 01 June 2006 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2006251659 A